(19) Europäisches Patentamt
European Patent Office
Office européen des brevets

(11) Publication number: **0 438 288 A2**

(12) # EUROPEAN PATENT APPLICATION

(21) Application number: **91300316.6**

(51) Int. Cl.[5]: **C08F 8/04,** B01J 31/12

(22) Date of filing: **16.01.91**

(30) Priority: **16.01.90 US 466136**

(43) Date of publication of application:
**24.07.91 Bulletin 91/30**

(84) Designated Contracting States:
**AT BE CH DE DK ES FR GB GR IT LI LU NL SE**

(71) Applicant: **MOBIL OIL CORPORATION**
**3225 Gallows Road**
**Fairfax Virginia 22037 (US)**

(72) Inventor: **Coolbaugh, Thomas Smith**
**412 Prospect Avenue**
**Morrisville, Pennsylvania 19067 (US)**
Inventor: **Loveless, Frederick Charles**
**252 Clover Hill Court**
**Yardley, Pennsylvania 19067 (US)**
Inventor: **Matthews, Demetreos Nestor**
**4 Forest Lane**
**Ewing, New Jersey 08628 (US)**

(74) Representative: **Colmer, Stephen Gary et al**
**Mobil Court 3 Clements Inn**
**London WC2A 2EB (GB)**

(54) **Method of synthesising a selective olefin hydrogenation catalyst.**

(57) There is disclosed a highly selective hydrogenation catalyst composition synthesized by adding an organometallic reducing agent, e.g., triethylaluminum, to a transition metal compound, e.g., nickel (II) octoate. The catalyst composition is synthesized either by adding the organometallic reducing agent to the transition metal compound, in that order, as rapidly as possible, or by adding the reducing agent and the transition metal compound, separately but substantially simultaneously, at substantially constant molar ratios to the catalyst synthesis vessel. The catalyst composition is subtantially more selective in hydrogenating mono-substituted and symmetrically disubstituted polymer double bonds in the presence of unsymmetrically disubstituted double bonds and double bonds having three or more substituents, and substantially more stable over extended periods of time at ambient conditions than prior art catalysts.

EP 0 438 288 A2

# METHOD OF SYNTHESISING A SELECTIVE OLEFIN HYDROGENATION CATALYST

This invention relates to a method of synthesising selective hydrogenation catalyst and process of using thereof. More particularly, the invention is directed to a method of synthesizing a highly selective, homogeneous catalyst composition which selectively hydrogenates polymers having residual double bonds which are mono-substituted and/or symmetrically di-substituted in the presence of polymers having residual double bonds which are unsymmetrically di-substituted or have three or more substituents. The invention is also directed to a method of synthesizing the catalyst and to a selective hydrogenation process conducted in the presence of the catalyst.

Several processes have been proposed heretofore for hydrogenating polymers containing ethylenic unsaturation(i.e., containing residual double bonds). Prior to hydrogenation, the polymers may contain simply ethylenic unsaturation as disclosed, for example, in US-A-3,465,063, or a combination of ethylenic and aromatic unsaturation, such as disclosed in US-A-3,700,748. The prior art hydrogenation processes either hydrogenated a significant portion of the simple ethylenically unsaturated polymers or hydrogenated a significant portion of an ethylenic unsaturation in the presence of an aromatic unsaturation, which remained substantially unhydrogenated. The heretofore-known catalysts which selectively hydrogenated ethylenic unsaturation in the presence of aromatic unsaturation were not necessarily able to selectively hydrogenate one type of ethylenic unsaturation in the presence of a dissimilar type of ethylenic unsaturation, e.g., they were not necessarily able to selectively hydrogenate polymers having residual double bonds which were mono-substituted and/or symmetrically disubstituted in the presence of polymers having residual double bonds which were unsymmetrically disubstitued, i.e., vinylidene.

There are, however, examples in the literature teaching that hydrogenation selectivity between dissimilar types of ethylenic unsaturation may be achieved, e.g., Sloan, et al., JOURNAL OF AMERICAN CHEMICAL SOCIETY, 1963, 85 :4014-4018 and Kroll, JOURNAL OF CATALYSIS, 1969, 15 :281-288. Similarly, Falk, JOURNAL OF POLYMER SCIENCE : PART A-1, Volume 9, 2617-2623 (1971) discloses a method of selectively hydrogenating 1,4-polybutadiene units in the presence of 1,4-polyisoprene units. More particularly, Falk discloses selective hydrogenation of the 1,4-polybutadiene block segment in the block copolymer of 1,4-polybutadiene - 1,4-polyisoprene - 1,4-polybutadiene and in random copolymers of 1,3-butadiene and 1,3-isoprene, with predominant 1,4-microstructure of both polymerized monomers. Selective hydrogenation is conducted in the presence of hydrogen and a catalyst made by the reaction of organoaluminum or lithium compound with transition metal salts of 2-ethylhexanoic acid.

Falk, DIE ANGEWANDTE CHEMIE 21 (1972) 17-23 (No. 286) discloses the selective hydrogenation of 1,4-polybutadiene segments in a block copolymer of 1,4-polybutadiene-1,4-polysisoprene-1,4-polybutadiene.

EP-A-0 315 280 discloses a method of selectively hydrogenating a polymer made from at least two different conjugated diolefins. One of the two diolefins is more substituted in the 2,3 and/or 4 carbon atoms than the other diolefin and produces a tri- or tetra-substituted double bond after polymerization. The selective hydrogenation is conducted at such conditions as to hydrogenate the ethylenic unsaturation incorporated into the polymer from the lesser substituted conjugated diolefin, while leaving unsaturated at least a portion of the tri- or tetra- ethylenic unsaturation incorporated into the polymer by the more substituted conjugated diolefin.

Mohajer et al., Hydrogenated linear block copolymers of butadiene and isoprene : effects of variation of composition and sequence architecture in properties, 23 POLYMER 1523-1535 (September 1982) disclose essentially completely hydrogenated butadiene-isoprene-butadiene (HBIB), HIBI and HBI block copolymers in which butadiene has predominantly 1,4- microstructure.

Kuraray KK, Japanese published patent application Number JP-328729, discloses a resin composition comprising 70-99% wt. of a polyolefin (preferably polyethylene or polypropylene) and 1-30% wt. of a copolymer obtained by hydrogenation of at least 50% of the unsaturated bond of an isoprene/butadiene copolymer.

However, prior art hydrogenation catalyst were unable to selectively hydrogenate polymers having residual double bonds which are mono-substituted and/or symmetrically disubstituted in the presence of residual double bonds which are unsymmetrically disubtituted, i.e., vinylidene.

Accordingly, it is a primary object of the present invention to provide a substantially homogeneous, highly selective hydrogenation catalyst having excellent long term shelf stability and hydrogenation selectivity for polymer residual double bonds which are mono-substituted and/or symmetrically disubstituted in the presence of residual double bonds which are unsymmetricallly disubstituted and/or have three or more substitients.

According to one aspect of the invention there is provided a method of synthesizing a selective hydrogenation catalyst composition comprising adding substantially simultaneously an organometallic reducing agent to a transition metal compound in such a manner that the mole ratio of the reducing agent to the transition metal compound is maintained substantially constant during substantially the entire time of the addition.

According to another aspect of the invention there is provided a method of synthesizing a selective hydrogenation catalyst composition comprising adding an organometallic reducing agent to a transition metal compound, in the recited order, as rapidly as practically possible to form the catalyst composition.

The organometallic reducing agent may be any one or a combination of compound of the elements of Group Ia, IIa, IIb, IIIa or IVa of the Periodic Table of the Elements, Published in LANGE'S HANDBOOK OF CHEMISTRY (13th Edition, 1985) McGraw-Hill Book Company, New York (John A. Dean, editor), such as an alkyl, an hydrido or an alkylhalo compound of the aforementioned elements. The organometallic reducing agent and the transition metal compound are preferably used as solutions thereof in suitable solvents.

As discussed above, the organometallic reducing agent is any one or a combination of any of the materials commonly employed to activate Ziegler-Natta olefin polymerization catalyst components containing at least one compound of the elements of Groups Ia, IIa, IIb, IIIA, or IVa of the Periodic Table of the Elements. Examples of such reducing agents are metal alkyls, metal hydrides, alkyl metal hydrides, alkyl metal halides, and alkyl metal alkoxides, such as alkyllithium compounds, dialkylzinc compounds, trialkylboron compounds, trialkylaluminum compounds, alkylaluminum halides and hydrides, and tetraalkylgermanium compounds. Mixtures of the reducing agents may also be employed. Specific examples of useful reducing agents include n-butyllithium, diethylzinc, di-n-propylzinc, triethylboron, diethylaluminumethoxide, triethylaluminum, trimethylaluminum, triisobutylaluminum, tri-n-hexylaluminum, ethylaluminum dichloride, dibromide, and dihydride, isobutyl aluminum dichloride, dibromide, and dihydride, diethylaluminum chloride, bromide, and hydride, di n-propylaluminum chloride, bromide, and hydride, diisobutylaluminum chloride, bromide and hydride, tetramethylgermanium, and tetraethylgermanium. Organometallic reducing agents which are preferred in this invention are Group IIIa metal alkyls and dialkyl metal halides having 1 to about 20 carbon atoms per alkyl radical. More preferably, the reducing agent is a trialkylaluminum compound having 1 to about 6 carbon atoms per alkyl radical. Other reducing agents which can be used herein are disclosed in US-A-3,787,384, column 4, line 45 to column 5, line 12 ; and in US-A-4,148,754, column 4, line 56 to column 5, line 59. Particularly preferred reducing agents are metal alkyls or hydride derivatives of a metal of Groups Ia, IIa or IIIa of the Periodic Table of the Elements, such as n-butyl lithium, sec-butyl lithium, n-hexyl lithium, phenyl-lithium, triethylaluminum, triisobutylaluminum, trimethylaluminum, diethylaluminum hydride and dibutylmagnesium.

Suitable transition metal compounds used herein are compounds of metals of Group IVb, Vb, VIb or VIII, preferably IVb or VIII, of the Periodic Table of the Elements. Non-limiting examples of such compounds are metal halides, e.g., titanium tetrachloride, vanadium tetrachloride ; vanadium oxytrichloride, titanium and vanadium alkoxides, wherein the alkoxide moiety has a branched or unbranched alkyl radical of 1 to about 20 carbon atoms, preferably 1 to about 6 carbon atoms. Preferred transition metal compounds are metal carboxylates or alkoxides of Group IVb or VIII of the Periodic Table of the Elements, such as nickel (II) 2-ethylhexanoate, titanium isopropoxide, cobalt (II) octoate, nickel (II) phenoxide and ferric acetylacetonate. The molar ratio of the metal derived from the reducing agent to the metal derived from the transition metal compound will vary for the selected combinations of the reducing agent and the transition metal compound, but in general it is 1 :1 to about 12 :1, preferably about 1.5 :1 to about 8 :1, more preferably about 2 :1 to about 7 :1 and most preferably about 2.5 :1 to about 6 :1. It will be apparent to those skilled in the art, that the optimal ratios will vary depending upon the transition metal and the organometallic agent used, e.g., for the trialkylaluminum/nickel(II) systems the preferred aluminum :
nickel molar ratio is about 2.5 :1 to about 4 :1, for the trialkylaluminum/cobalt(II) systems the preferred aluminum :
cobalt molar ratio is about 3 :1 to about 4 :1 and for the trialkylaluminum/titamium(IV) alkoxides systems, the preferred aluminum : titanium molar ratio is about 3 :1 to about 6 :1.

The mode of addition and the ratio of the reducing agent to the transition metal compound are important in the production of the hydrogenation catalyst according to the invention. In accordance with the invention the molar ratio of the reactants used to synthesize the catalyst is maintained substantially constant. This can be achieved either by the addition of the reducing agent, as rapidly as possible, to a solution of the transition metal compound, or by a substantially simultaneous addition of the separate streams of the reducing agent and the transition metal compound to a catalyst synthesis vessel in such a manner that the selected molar ratios of the metal of the reducing agent to the metal of the transition metal compound are maintained substantially constant throughout substantially the entire time of addition of the two compounds. The time required for the addition must be such that excessive pressure and heat build up are avoided, i.e., the temperature should not exceed about 80°C and the pressure should not exceed the safe pressure limit of the catalyst synthesis vessel.

The method involving simultaneous addition of the reducing agent and transition metal compound permits the control of the exothermic reaction so that the heat build up is not excessive, and the rate of gas production during the catalyst synthesis is also not excessive-accordingly the gas build-up is relatively slow. In this embodiment, carried out with or without solvent diluent, the rate of addition of the catalyst components is preferably

adjusted to maintain the synthesis reaction temperature at or below about 80°C, which promotes the formation of the catalyst of this invention. Furthermore, the selected molar ratios of the metal of the reducing agent to the metal of the transition metal compound are maintained substantially constant throughout the entire duration of the catalyst preparation when the simultaneous mixing technique of this embodiment is employed.

In the method involving rapid addition of the reducing agent to the transition metal compound the timing and the order of addition of the two reactants is important to obtain the novel hydrogenation catalyst having superior selectivity, efficiency and stability, as compared to prior art catalysts. Thus, in this embodiment, it is important to add the reducing agent to the transition metal compound in that order in as short a time period as practically possible. In this embodiment, the time alloted for the addition of the reducing agent to the transition metal compound is critical for the production of the catalyst of this invention. The term "as short a time period as practically possible" means that the time of addition is as rapid as possible , such that the reaction temperature is not higher than about 80°C and the reaction pressure does not exceed the safe pressure limit of the catalyst synthesis vessel. As will be apparent to those skilled in the art, that time will vary for each synthesis and will depend on such factors as the types of the reducing agents, the transition metal compounds and the solvents used in the synthesis, as well as the relative amounts thereof, and the type of the catalyst synthesis vessel used. For purposes of illustration, a solution of about 15 ml of triethylaluminum in hexane should be added to a solution of nickel(II) octoate in mineral spirits in about 10-30 seconds. Generally, the addition of the reducing agent to the transition metal compound should be carried out in about 5 seconds (sec) to about 5 minutes, depending on the quantities of the reagents used. If the time period during which the reducing agent is added to the transition metal compound is prolonged, e.g., more than 15 minutes, the synthesized catalyst is less selective, less stable and may be heterogeneous.

In the embodiment wherein the reducing agent is added as rapidly as possible to the transition metal compound, it is also important to add the reducing agent to the transition metal compound in the aforementioned sequence to obtain the novel catalyst of this invention. The reversal of the addition sequence, i.e., the addition of the transition metal compound to the reducing agent, or the respective solutions thereof, is detrimental to the stability, selectivity, activity and homogeneity of the catalyst of this invention and is therefore undesirable.

In all embodiments of the invention, it is preferred to use solutions of the reducing agent and the transition metal compound in suitable solvents, such as hydrocarbon solvents, e.g., cyclohexane, hexane, pentane, heptane, benzene, toluene or mineral oils. The solvents used to prepare the solutions of the reducing agent and of the transition metal compound may be the same or different, but if they are different, they must be compatible with each other so that the solutions of the reducing agent and the transition metal compound are fully soluble in each other.

The selective hydrogenation catalyst formed by the methods described above is soluble in the aforementioned hydrocarbon solvents with no evidence of heterogeneity, and it is stable for extended periods of time, e.g., several months, without a substantial loss of activity or selectivity. In contrast, prior art catalysts made, e.g., by the addition of the transition metal compound to the reducing agent, or the respective solutions thereof, in that order over prolonged time periods, e.g., 30-90 minutes, were heterogeneous to at least some extent and maintained their stability at room temperature only for a limited period of time, i.e., they frequently showed decay in activity and selectivity within about one week.

When the preferred method of the catalyst preparation, is used, i.e., the simultaneous addition of the reducing agent and the transition metal compound, the time over which the catalyst synthesis reactants are combined is less critical, since the desired molar ratios of the reactants are maintained substantially constant throughout the addition period. It is, therefore, relatively easy to maintain any desired temperature for the synthesis reaction. The aforementioned constant molar ratio furthermore prevents the formation of heterogeneous catalysts and promotes the formation of the desired highly stable, highly selective, homogeneous catalyst of this invention.

In any embodiment of the invention, the catalyst is synthesized under inert reaction conditions, preferably in the atmosphere if inert gases, such as nitrogen or argon. When the two components of the catalyst of this invention are mixed, reaction occurs instantly at room temperature and is evidenced by the immediate formation of a black color. Analysis of the gases produced during the catalyst preparation when triethylaluminum is used as the organometallic reducing agent shows the presence of a number of $C_1$, $C_2$, $C_3$ and $C_4$ hydrocarbon species presumably derived from the alkyl ligands present on the aluminum component.

In contrast, the synthesis of catalysts of similar compositions, but synthesized according to the methods of prior art, also yields volatile hydrocarbon species but in ratios and quantities different from those of the present invention. Similarly, the catalyst of this invention exhibits different degrees of ethylene dimerization and olefin isomerization activities than the prior art catalysts. As will be apparent to those skilled in the art, the differences in the chemical nature and the quantities of the gases that are formed during the preparation of the catalysts of this invention and those of prior art are indicative of the differences of the nature of the catalyst of

this invention. Additionally, the differences in the degrees of $C_4$ formation with the catalyst of this invention, presumably from ethylene dimerization, as compared to the catalysts of prior art, also indicate the novel nature of the catalyst of this invention.

The catalyst of this invention is very effective in selectively hydrogenating polymer residual double bonds which are mono-substituted and/or symmetrically disubstituted in the presence of residual double bonds which are unsymmetrically disubstituted. As used herein, the term "mono-substituted" means that the double bonds has only one of its four hydrogen atoms substituted by a substituent, e.g., a hydrocarbyl group ; the term "symmetrically disubstituted" means that each of the carbon atoms of the residual double bond has one of its hydrogen atoms substituted by a substituent, e.g., a hydrocarbyl group ; and the term "unsymmetrically disubstituted" means that only one of the two carbon atoms has both of its hydrogen atoms substituted by substituents, e.g., hydrocarbyl groups, while the other carbon atom has two hydrogens attached to it. The unsymmetrically disubstituted residual double bond is known as a vinylidene group. The term "residual double bonds" refers to the double bonds present in the polymer prior to the selective hydrogenation reaction.

For example, block copolymers comprising at least three alternating blocks : $(I)_x$-$(B)_y$-$(I)_x$, defined in detail below, are selectively hydrogenated in the presence of the catalyst of this invention, so that the B block is substantially completely hydrogenated, while the I blocks retain a sufficient amount of their original unsaturation, e.g., 5 to 100%, usually about 100%, to vulcanize the block copolymers.

In the aforementioned block copolymers

$$(I)_x\text{-}(B)_y\text{-}(I)_x$$

the blocks I and B are defined as follows :

I is a block of at least one polymerized conjugated diene having at least five (5) carbon atoms and the following formula

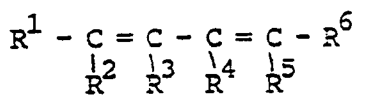

(1)

wherein $R^1$ - $R^6$ are each hydrogen or a hydrocarbyl group, provided that at least one of $R^1$ - $R^6$ is a hydrocarbyl group and further provided that the structure of the residual double bond in the polymerized block I has the following formula :

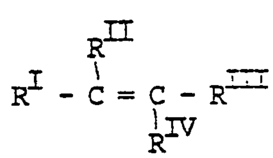

(2)

wherein $R^I$, $R^{II}$, $R^{III}$ and $R^{IV}$ are each hydrogen or a hydrocarbyl group, provided that either both $R^I$ and $R^{II}$ are hydrocarbyl groups or both $R^{III}$ ans $R^{IV}$ are hydrocarbyl groups ; and

B is a block of at least one polymerized conjugated diene, different from that used to polymerize block I, having at least four (4) carbon atoms and the following formula

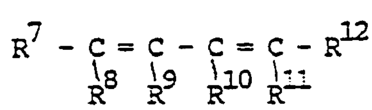

(3)

wherein $R^7$-$R^{12}$ are each hydrogen or a hydrocarbyl group, provided that the structure of the residual double bond in the polymerized block B has the following formula

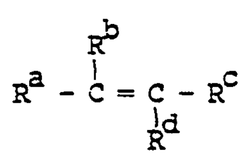

(4)

wherein $R^a$, $R^b$, $R^c$ and $R^d$ are each hydrogen (H) or a hydrocarbyl group, provided that one of $R^a$ or $R^b$ is hydrogen, one of $R^c$ or $R^d$ is hydrogen and at least one of $R^a$, $R^b$, $R^c$ or $R^d$ is a hydrocarbyl group. X is 1-100, preferably 2-100, and most preferably 2-30, and y is 300 to 35,000, preferably 1,000 to 5,000, and most preferably

1,500 to 4,000, i.e., each of the I blocks is polymerized from 1 to 100, preferably from 2 to 100, and most preferably from 2 to 30 monomer units, and each of the B blocks from 300 to 35,000, preferably from 1,000 to 5,000, and most preferably from 1,500 to 4,000 monomer units, respectively. Examples of suitable dienes for the polymerization of the blocks I and B are isoprene and butadiene, respectively.

The selectively observed with the catalyst composition of this invention is not disclosed in the prior art. For example, Falk, cited above, discloses that the disubstituted double bonds of 1,4-polybutadiene can be selectively hydrogenated in the presence of the trisubstituted double bonds of 1,4-polyisoprene. Selectivity between the disubstituted 1,4-polybutadiene double bonds and the disubstituted 3,4-polyisoprene double bonds obtained with the catalyst composition of this invention is therefore not disclosed in Falk. The selectivity of the catalyst composition of this invention is even more surprising in view of the disclosure of EP-A-0 315 280 that disubstituted 1,4-polybutadiene double bonds, monosubstituted 1,2-polybutadiene double bonds and disubstituted 3,4-polyisoprene double bonds are hydrogenated simultaneously at subtantially the same rates. In contrast, the catalyst and process of this invention selectively hydrogenate monosubstituted 1,2-polybutadiene double bonds and disubstituted 1,4-polybutadiene double bonds in the presence of disubstituted 3,4-polyisoprene double bonds, which remain substantially unhydrogenated.

The hydrogenation process comprises contacting the unsaturated polymer to be hydrogenated with an amount of the catalyst solution containing about 0.1 to about 0.5, preferably about 0.2 about 0.3 mole percent of the transition metal based on moles of the polymer unsaturation. The hydrogen partial pressure is about 5 psi (34.5 kPa) to about several hundred psi (over 1370 kPa), but preferably it is about 10 psi (69 kPa) to about 100 psi (690 kPa). The temperature of the hydrogenation reaction mixture is about 25 to about 80°C, since higher temperatures may lead to catalyst deactivation. The lenght of the hydrogenation reaction may be as short as 30 minutes and, as will be apparent to those skilled in the art, it depends to a great extent on the actual reaction conditions employed. The hydrogenation process may be monitored by any conventional means, e.g., infra-red spectroscopy, hydrogen flow rate, total hydrogen consumption, or any combination thereof.

Upon completion of the hydrogenation process, unreacted hydrogen is either vented or consumed by the introduction of the appropriate amount of an unsaturated material, such as 1-hexene, which is converted to an inert hydrocarbon, e.g., hexane. Subsequently, the catalyst is removed from the resulting polymer solution by any suitable means, selected depending on the particular process and polymer. For a low molecular weight material, for example, catalyst residue removal may consist of a treatment of the solution with an oxidant, such as air, and subsequent treatment with ammonia and optionally methanol at levels equal to the molar amount of the metals (i.e., the sum of the transition metal and the metal of the reducing agent) present in the hydrogenation catalyst to yield the catalyst residues as a filterable precipitate, which is filtered off. The solvent may then be removed by any conventional methods, such as vacuum stripping, to yield the product polymer as a clear, colorless fluid.

Alternatively, and in a preferred embodiment, upon completion of the hydrogenation reaction, the mixture is treated with ammonia in the molar amount about to that of the metals (i.e., the sum of the transition metal and the metal of the reducing agent) and aqueous hydrogen peroxide, in the molar amount equal to about one half to about one, preferably one half, of the amount of the metals. Other levels of the ammonia and peroxide are also operative, but those specified above are particularly preferred. In this method, a precipitate forms, which may be filtered off as described above.

In yet another alternative method, the catalyst may be removed by extraction with an aqueous mineral acid, such as sulfuric, phosphoric or hydrochloric acid, followed by washing with distilled water. A small amount of a material commonly used as an aid in removing transition metal-based catalyst, such as a commercially available high molecular weight diamine, e.g., Jeffamine D-2000 from Texaco, may be added to aid in phase separation and catalyst removal during the extractions. The resultant polymer solution is then dried over a drying agent, such as magnesium sulfate, separated from the drying agent and the solvent is then separated by any conventional methods, such as vacuum stripping, to yield a polymer as a clear fluid. Other methods of polymer isolation, such as steam or alcohol flocculation, may be employed depending upon the hydrogenated polymer properties.

The following Examples further illustrate some features of the invention. However, it will be apparent to those skilled in the art that the specific reactants and reaction conditions used in the Examples do not limit the scope of the invention.

In all of the following examples, the experimental work was performed with dried reactors and equipment and under strictly anaerobic conditions. Extreme care must be used to exclude air, moisture and other impurities capable of interfering with the delicate chemical balance involved in the synthesis of the catalyst of this invention, as will be apparent to those skilled in the art.

EXAMPLE 1

(Hydrogenation Catalyst Synthesis : Fast Addition of Organometallic Reducing Agent to Transition Metal Compound)

This example illustrates the preparation of the selective hydrogenation catalyst of this invention by adding triethylaluminum as rapidly as possible to a nickel solution in such amounts that the molar ratio of aluminum to nickel was 3.6 :1.

In a clean, dry pressure bottle equiped with a magnetic stir bar, were placed 71.86 ml of pure, dry cyclohexane and 7.34 g of nickel (II) octoate (8% in mineral spirits, Mooney Chemical). The bottle was sealed with a septum and bottle cap, evacuated and refilled with dry nitrogen. The process was repeated several times. The mixture was then stirred vigorously and 20.80 ml of 1.73 M triethyllualuminum was added via syringe as quickly as possible (about 15 seconds). The reaction mixture temperature increased 10°C within the first 10 seconds and a large amount of gas evolution was evidenced. Periodically, pressure was vented by means of a needle fitted with a valve. There was no evidence of heterogeneity in the final black reaction mixture. The catalyst solution nickel concentration was 0.1 M and the molar ratio of aluminum to nickel was 3.6 :1.

EXAMPLE 2

(Hydrogenation Catalyst Synthesis : Fast Addition of Organometallic Reducing Agent)

This example illustrates the preparation of the selective hydrogenation catalyst of this invention wherein triethylaluminum was added quickly to a nickel solution and the molar ratio of aluminum to nickel was 2.5 :1.

In a clean, dry pressure bottle equipped with a magnetic stir bar, were placed 77.88 ml of pure, dry cyclohexane and 7.34g of nickel(II) octoate (8% in mineral spirits, Mooney Chemical). The bottle was sealed with a septum and bottle cap, evacuated and refilled with dry nitrogen. The process was repeated several times. The mixture was then stirred vigorously and 14.40 ml of 1.73 M triethylaluminum was added via syringe as quickly as possible (about 15 seconds). The observed temperature rise and gas evolution were similar to those of Example 1. Periodically, pressure was vented by means of a needle fitted with a valve. There was no evidence of heterogeneity in the final black reaction mixture. The catalyst solution nickel concentration was 0.1 M and the molar ratio of aluminum to nickel was 2.5 :1.

EXAMPLE 3

(Hydrogenation Catalyst Synthesis : Simultaneous Addition of Organometallic Reducing Agent and Transition Metal Compound)

This example illustrate the simlultaneous addition method of preparation of the selective hydrogenation catalyst of this invention wherein the molar ratio of aluminum to nickel was 2.5 :1.

Cyclohexane (100 ml) was placed in a clean, dry, 250 ml three-necked round bottom flask fitted with two pressure-equalized dropping funnels, magnetic stir bar and nitrogen inlet. In one of the dropping funnels was placed 15.44 ml of nickel(II) octoate (14.68 g, 8% in mineral spirits, Mooney Chemical) and 34.56 ml of dry cyclohexane. In the order funnel was placed 28.80 ml of 1.73 M triethylaluminum and 21.2 ml of dry cyclohexane. The aluminum and nickel containing solutions were then fed at equal rates (to maintain a constant aluminum: nickel molar ratio) over approximately a 25 minute period to the stirred cyclohexane in the round bottom flask, while maintaining 3 to 5 psig (122 to 136 kPa) pressure of dry nitrogen. A black reaction mixture formed immediately with only mild heat evolution. When the additions were completed, the mixture in the flask was stirred for an additional ten minutes and transferred to a sealed pressure bottle under a nitrogen atmosphere. There was no evidence of heterogeneity in the final black reaction mixture. The catalyst solution nickel concentration was 0.1 M and the molar ratio of aluminum to nickel was 2.5 :1. The schedule of the addition of the aluminum and nickel containing solutions was as follows :

| Time into reaction (Minutes) | Solutions Added Al (ml) | Ni | Temperature (degrees C) |
|---|---|---|---|
| 0 | 0 | 0 | 26.0 |
| 5 | 7 | 5 | 29.6 |
| 8 | 13 | 13 | 34.5 |
| 10 | 20 | 20 | 37.5 |
| 12 | 25 | 25 | 40.5 |
| 14 | 30 | 30 | 41.5 |
| 16 | 35 | 35 | 43.2 |
| 18 | 40 | 40 | 43.9 |
| 20 | 45 | 45 | 44.1 |
| 22 | 50 | 50 | 44.3 |
| 25 | — | — | 42.4 |

## EXAMPLE 4

(Hydrogenation Catalyst Synthesis : Fast Addition of Organometallic Reducing Agent)

In a clean, dry pressure bottle equipped with a magnetic stir bar, were placed 78.29 ml of pure, dry cyclohexane and 2.37 ml of tetra-n-butyltitanate (6.94 mmol). The bottle was sealed with a septum and bottle cap, evacuated and refilled with dry nitrogen. The process was repeated several times. The mixture was then stirred vigorously and 24.08 ml of 1.73 M triethylaluminum were added via syringe as quickly as possible (about 15 seconds). The initial colorless solution turned dark red immediately and only a slight temperature rise was observed. There was no evidence of heterogeneity in the final reaction mixture. The catalyst solution titanium concentration was 0.1 M and the molar ratio of aluminum to titanium was 6.0 :1.

## EXAMPLE 5

(Isoprene-Butadiene-Isoprene Triblock Polymer)

Three hundred milliliters (ml) of purified, dried cyclohexane (99.5%, Phillips Petroleum) were introduced into a six-hundred milliliter (ml) stirred glass reactor. Air was removed from the reactor under vacuum and replaced by dry nitrogen. The reactor was equipped with an air driven stirrer, a pressure gauge, thermocouple, top surface inlet valve, dip tube feeder with valve, heating-mantle and variable controller and combination nitrogen/vacuum inlet with valve. Three ml of 0.01 M solution of bipyridyl in cyclohexane, 7.3 ml (90 mmol) of tetrahydrofuran freshly distilled from benzophenone ketyl and 1.8 ml (18 mmol) of purified isoprene were injected into the reactor. The temperature of the reactor and its contents was raised to 50°C. The solution was then titrated by addition of 1.6 M butyl lithium until a persistent red color was obtained. Following this, 3.75 ml of 1.6 M butyl lithium was injected into the reactor in order to initiate polymerization of the isoprene. The reaction was allowed to run for one hour, after which 47.5 g of purified butadiene were pressured into the reactor at a rate such that the reaction temperature did not exceed 70°C. After one hour, the reactor pressure had returned to its initial level and the formation of the second block of the copolymer was completed. Isoprene (1.8 ml, 18 mmol) was again injected into the reactor to allow for the formation of the third and final block of the triblock polymer. After one hour, 0.35 ml of acetic acid (4.5 mmol) were injected into the reactor to quench the triblock living anion. The color of the reaction mixture changed from a dark amber to colorless immediately. The mixture was cooled to room temperature, filtered through alumina/Celite, an anti-oxidant, Irganox 1076 from Ciba-Geigy (100 ppm based on dry polymer) was added and solvent was removed under reduced pressure to yield a triblock polymer of about 8400 molecular weight as a clear, colorless, viscous fluid. Infra-red analysis (Fourier Transform) showed the butadiene center block to possess 55% (1,2)- and 45% of (1,4)-microstructure.

EXAMPLE 6

(Hydrogeantion of Isoprene-Butadiene-Isoprene Block Copolymer)

This example illustrates the selective hydrogenation of the central polybutadiene block of an isoprene-butadiene-isoprene triblock polymer using the catalyst of Example 1.

250 ml of cyclohexane in which was dissolved 23 g of a triblock polymer prepared in the manner similar to that of Example 5 were purged of air by evacuation followed by the introduction of dry nitrogen. This amount of polymer contained 0.403 moles of polybutadiene unsaturation. To the polymer solution was added 25 ml of a hydrogenation catalyst solution of Example 1 comprised of triethylaluminum and nickel (II) octoate in a 3.6 :1 ratio with a nickel concentration of 0.1 M in cyclohexane.The resulting mixture was placed in a Parr hydrogenation apparatus and pressured to 50 psig (446 kPa) hydrogen. The apparatus was vented and the process repeated twice more, after which the pressure was maintained at 50 psig (446 kPa) of hydrogen. The temperature was raised to 50°C and the mixture was agitated vigorously. Hydrogen was fed on demand in order to maintain 50 psig (446 kPa) in the vessel and the flow rate was monitored by means of a mass flowmeter. The progress of the hydrogenation process was monitored both by Fourier Transform infra-red spectroscopy and hydrogen flow rate. An infra-red spectrum obtained at the start of the process display the presence of primarily the butadiene unsaturation (peaks at 995, 968 and 910 wavenumbers). After thirty minutes, butadiene vinyl unsaturation (peaks at 995 and 910 wavenumbers) was gone, the trans-(1,4)-polybutadiene unsaturation was significantly reduced (968 wavenumbers) and the isoprene vinylidene (888 wavenumbers) was very much in evidence. After ninety minutes, only the isoprene unsaturation remained. This final point corresponded to zero hydrogen flow. Upon completion of the selective hydrogenation process, the vessel was vented and the black reaction mixture was stirred in air with ammonium hydroxide and methanol stoichiometrically equivalent to the total catalyst metal content (11.5 mmol, 0.7 ml concentrated ammonia and 0.5 ml methanol). Within several hours, the mixture had changed to a dark green color indicative of oxidized nickel. The mixture was filtered through alumina/Celite and an anti-oxidant was added in the amount equivalent to 100 ppm based on the dry polymer weight. Solvent was then removed under reduced pressure to yield the product as a clear, colorless, viscous fluid.

EXAMPLE 7

(Hydrogenation of Isoprene-Butadiene-Isoprene Block Copolymer)

This example illustrates the selective hydrogenation of the central polybutadiene block of an isoprene-butadiene-isoprene block copolymer using the catalyst of Example 2.

A solution of 30 g of triblock polymer prepared as in Example 5 in 200 ml of cyclohexane was purged of air by evacuation, followed by the introduction of dry nitrogen. This amount of polymer contained 0.526 moles of polybutadiene unsaturation. To the polymer solution was added 15 ml of the hydrogenation catalyst solution of Example 2 comprised of triethylaluminum and nickel(II) octoate in a 2.5 :1 molar ratio with a nickel concentration of 0.1 M in cyclohexane. The resulting mixture was placed in a Parr hydrogenation apparatus and pressured to 50 psig (446 kPa) hydrogen. The apparatus was then vented and the process was repeated twice more, after which the pressure was maintained at 50 psig (446 kPa) of hydrogen. The temperature was then raised to 50°C and the mixture was agitated vigorously. Hydrogen was fed on demand in order to maintain 50 psig (446 kPa) in the vessel and the flow rate was monitored by means of a mass flowmeter. The progress of the hydrogenation process was monitored both by Fourier Transform infra-red spectroscopy and hydrogen flow rate. An infra-red spectrum obtained at the start of the process displayed the presence of primarily butadiene unsaturation (peaks at 995,968 and 910 wavenumbers). After thirty-eight minutes, butadienyl vinyl unsaturation (peaks at 995 and 910 wavennumbers) was gone and the trans-(1,4)-polybutadiene unsaturation was greatly reduced (968 wavenumbers). The peak corresponding to the isoprene vinylidene groups (888 wavenumbers) was predominant. After a total of seventy minutes, only the isoprene unsaturation remained at a level approximately 5% greater than that of Example 6. Upon completion of the hydrogenation process, the vessel was vented and the black reaction mixture was stirred with ammonium hydroxide stoichiometrically equivalent to the total catalyst metal content (5.25 mmol, 0.33 ml) and with one-half of an equivalent of 30% hydrogen peroxide (2.62 mmol, 0.30 ml). Within one hour, a green precipitate had formed. The mixture was filtered through alumina/Celite and an antioxidant (100 ppm based on dry polymer) was added. Solvent was then removed under reduced pressure to yield the product as a clear, colorless, viscous fluid.

EXAMPLE 8

(Hydrogenation of Isoprene-Butadiene-Isoprene Block Copolymer)

This example illustrates the selective hydrogenation of the central polybutadiene block of an isoprene-butadiene-isoprene block copolymer with the catalyst of Example 3.

The procedure was substantially the same as that of Example 7, except that the selective hydrogenation catalyst used was that of Example 3 and that after stirring with ammonium hydroxide and hydrogen peroxide, the green mixture was subjected to an aqueous catalyst removal step. Following the appearance of the green precipitate, the mixture was stirred with 200 ml of a dilute sulfuric acid after which the green color of the mixture immediately disappeared. Stirring was stopped and the aqueous layer was removed (2 drops of Jeffamine D-2000 were added to aid in phase separation). The process was repeated once with dilute acid and twice with distilled water. Following the second water wash, the cyclohexane solution was dried over magnesium sulfate, antioxidant was added at 100 ppm based on dry polymer weight and solvent was removed under reduced pressure to yield the product as a clear, colorless, viscous fluid. Infra-red analysis indicated that the amount of isoprene vinylidene unsaturation present was about 7% greater than that of Example 7 and 11% greater than that of Example 6.

EXAMPLE 9

(Hydrogenation of Isoprene-Butadiene-Isoprene Block Copolymer)

This example illustrates the selective hydrogenation of the central polybutadiene block of an isoprene-butadiene-isoprene block copolymer with the catalyst of Example 4.

The procedure was similar to that of Example 7, except that the selective hydrogenation catalyst was that of Example 4 which contained titanium instead of nickel. A solution of 15 g of a triblock polymer prepared as in Example 5 in 200 ml of cyclohexane was purged of air by evacuation followed by the introduction of dry nitrogen. This amount of polymer contained 0.263 moles of polybutadiene unsaturation. To the polymer solution was added 10 ml of a hydrogenation catalyst solution of Example 4 comprised of triethylaluminum and tetra-n-butyltitanate in a 6 :1 mole ratio with a titanium concentration of 0.1 M in cyclohexane. The resulting mixture was placed in a Parr hydrogenation apparatus and pressured to 50 psig (446 kPa) hydrogen. The apparatus was then vented and the process was repeated two more times ; subsequently, the pressure was raised to 90 psig (722 kPa) of hydrogen. The temperature was then raised to 50°C and the mixture was agitated vigorously. Hydrogen was fed on demand in order to maintain the pressure of 90 psig (722 kPa) in the vessel. The progress of the hydrogenation process was monitored both by Fourier Transform infra-red spectroscopy and hydrogen flow rate. An infra-red spectrum obtained at the start of the process displayed the presence of primarily butadiene unsaturation (peaks at 995, 968 and 910 wavenumbers). Within twelve hours, the (1,2)-polybutadiene unsaturation was completely gone and that derived from (1,4)-polybutadiene was significantly reduced. The unsaturation derived from (3,4)-polyisoprene was essentially unchanged. Surprisingly, vinyl unsaturation derived from (1,2)-polyisoprene was clearly in evidence. Continued reaction showed further reduction in the polybutadiene unsaturation with no change in the unsaturation derived from both, (1,2)-polyisoprene and (3,4)-polyisoprene. Upon completion of the process, the material was vented and treated with ammonia and methanol in air in an amount equivalent to the hydrogenation catalyst metal content. Within two hours a yellow solution was obtained which was then filtered through alumina and vacuum stripped to yield the product polymer as a clear, viscous fluid.

It will be apparent to those skilled in the art that the specific embodiments discussed above can be successfully repeated with ingredients equivalent to those generically or specifically set forth above and under variable process conditions.

## Claims

1. A method of synthesizing a selective hydrogenation catalyst composition comprising adding substantially simultaneously an organometallic reducing agent to a transition metal compound in such a manner that the mole ratio of the reducing agent to the transition metal compound is maintained substantially constant during substantially the entire time of the addition.

2. A method of synthesizing a selective hydrogenation catalyst composition comprising :
   adding an organometallic reducing agent to a transition metal compound, in the recited order, as rapidly as practically possible to form the catalyst composition.

3. A method according to claim 1 or 2 wherein the organometallic reducing agent is at least one compound of the elements of Groups Ia, IIa, IIb, IIIa or IVa of the Periodic Table of the Elements.

4. A method according to claim 1, 2 or 3 wherein the transition metal compound is a compound of metals of Group IVb, Vb, VIb or VIII of the Periodic Table of the Elements.

5. A method according to claim 1, 2, 3 or 4 wherein the transition metal compound is a metal carboxylate or a metal alkoxide of a metal of Group IVb or VIII of the Periodic Table of the Elements.

6. A method according to any preceding claim wherein the amounts of the reducing agent and the transition metal compound are such that the molar ratio of the metal of the reducing agent to the metal of the transition metal compound is substantially 1 : 1 to substantially 12 :1.

7. A method according to claim 6 wherein the molar ratio of the metal of the reducing agent to the metal of the transition metal compound is substantially 1.5 : 1 to substantially 8 :1.

8. A method according to claim 6 wherein the molar ratio of the metal of the reducing agent to the metal of the transition metal compound is substantially 2 : 1 to substantially 7 :1.

9. A method according to claim 6 wherein the molar ratio of the metal of the reducing agent to the metal of the transition metal compound is substantially 2.5 : 1 to substantially 6 :1.

10. A method according to any preceding claim wherein the reducing agent is in the form of a solution thereof in a solvent, and the transition metal compound is in the form of a solution thereof in a solvent which is the same as or different than the solvent used to prepare the solution of the reducing agent.

11. A method according to any preceding claim wherein the reducing agent is triethylaluminum.

12. A method according to claim 11 wherein the transition metal compound is : nickel (II) octoate ; tetra-n-butyltitanate ; a compound of nickel (II) ; a compound of cobalt (II) ; or titanium (IV) alkoxide.

13. A method according to claim 12 wherein when the transition metal compound is a compound of nickel the molar ratio of aluminium to nickel is substantially 2.5 :1 to substantially 4 :1 ; when the transition metal compound is a compound of cobalt (II) the ratio of aluminium to cobalt is substantially 3 :1 to substantially 4 :1 ; and when the transition metal compound is titanium (IV) alkoxide the ratio of aluminum to titanium is substantially 3 :1 to substantially 6 :1.

14. A selective hydrogenation catalyst composition made in accordance with the method of any of claims 1 to 13.

15. A method of hydrogenating a polymer containing double bonds comprising contacting the polymer with a catalyst composition formed according to any of claims 1 to 13 and hydrogen under hydrogenation reaction conditions for a sufficient time to hydrogenate the polymer, and removing the catalyst composition from the thus-obtained hydrogenated polymer.

16. A method according to claim 15 wherein the catalyst is removed by a method comprising contacting the hydrogenation reaction mixture with ammonia and an aqueous hydrogen peroxide, the ammonia being used in such an amount that the molar ratio of the ammonia to the sum of the transition metal and the metal of the reducing agent is substantially 1 :1, and the hydrogen peroxide being used in such an amount that the molar ratio of the hydrogen peroxide to the sum of the transition metal and the metal of the reducing agent is substantially 0.5 :1, and removing the material so produced.